# FASCICULE DE BREVET EUROPEEN

(11) **EP 2 406 557 B1**
(45) Date de publication et mention de la délivrance du brevet: **03.12.2014**
(21) Numéro de dépôt: 10710904.3
(22) Date de dépôt: 12.03.2010
(51) Int. Cl.: F24J 2/34

(54) **INSTALLATION SOLAIRE**
SOLAREINRICHTUNG
SOLAR EQUIPMENT

(30) Priorité: 13.03.2009 FR 0901207
(43) Date de publication de la demande: 18.01.2012
(73) Titulaire: Moteurs Leroy-Somer, 16000 Angouleme (FR)
(72) Inventeur: COUPART, Eric, F-16000 Angouleme (FR)
(74) Mandataire: Tanty, François
(86) Numéro de dépôt international: PCT/IB2010/051084
(87) Numéro de publication internationale: WO 2010/103496

(56) Documents cités:
- FR-A1- 2 595 764
- US-A- 4 136 668
- US-A- 4 273 101
- US-A- 4 676 068
- US-B1- 7 614 397

## Description

La présente invention concerne le stockage d'énergie et la production d'énergie électrique à partir d'énergie solaire.

Il est connu de récupérer la chaleur d'origine solaire à l'aide d'un fluide caloporteur circulant dans des canalisations entre une zone de chauffage, par exemple définie par le foyer d'un miroir parabolique d'un capteur solaire, et une zone de restitution de la chaleur, définie par exemple par un échangeur de chaleur, puis de transformer l'énergie thermique ainsi récupérée en énergie mécanique, afin d'entraîner par exemple un alternateur.

L'emploi d'un fluide caloporteur oblige à garantir l'étanchéité de la circulation de celui-ci et, de plus, en l'absence de soleil, la production électrique cesse.

Il est ainsi intéressant de prévoir dans une centrale solaire des moyens de stockage d'énergie de façon à permettre une continuation de la production d'électricité en cas d'ensoleillement insuffisant.

Compte tenu du coût de ces moyens de stockage d'énergie, la centrale est prévue avec une puissance importante, ce qui implique de nombreux capteurs sur une étendue importante, de telle sorte que la production électrique reste géographiquement localisée, ce qui peut poser des problèmes de transport d'électricité et limite l'utilisation de l'énergie solaire sur le territoire.

Pour produire de l'énergie électrique à partir d'énergie solaire, des cellules photovoltaïques sont encore employées. De façon à réguler la production d'énergie électrique, des accumulateurs sont souvent utilisés, ce qui pose un problème de coût et de maintenance.

US 4 205 656 décrit un système de stockage d'énergie solaire, comportant des contenants sphériques renfermant un matériau à changement d'état.

La demande GB 2 447 864 enseigne de transporter des modules comportant un matériau à changement d'état depuis un lieu de chauffage, constitué par exemple par un moteur thermique, à un lieu d'utilisation, par exemple des habitations.

US 4 136 668 décrit une installation et un procédé mettant en oeuvre une étape de récuperation de l'énergie solaire.

L'invention vise à proposer une nouvelle installation solaire qui soit relativement simple à mettre en oeuvre, de rendement satisfaisant, et compatible avec une implantation à large échelle.

Selon l'un de ses aspects, l'invention a pour objet une installation solaire, selon la revendication 1.

Les zones de chauffage et de récupération thermique sont avantageusement éloignées l'une de l'autre, afin de générer le moins d'ombre possible sur le capteur. La zone de récupération peut par exemple être placée derrière le capteur.

Le matériau ci-dessus possède avantageusement une capacité thermique supérieure à 0,5 kJ k⁻¹ kg⁻¹ et une chaleur latente supérieure à 200 kJ kg⁻¹.

Grâce à l'invention, la production d'électricité peut être étalée sur une journée entière à partir de l'énergie thermique emmagasinée à haute température pendant la journée d'ensoleillement, sous forme de chaleur latente notamment.

En cas de manque de soleil passager, dû à des nuages, l'énergie thermique accumulée sert de tampon et la production électrique n'est pas immédiatement affectée.

Grâce à un tel étalement de la production, il est possible de diviser par plus de deux la taille du convertisseur thermodynamique associé à l'installation ainsi que la taille des lignes électriques de connexion au réseau de distribution, ce qui est particulièrement avantageux pour les sites de production isolés, éloignés des lieux de consommation d'électricité.

A l'inverse, il est possible de dimensionner si on le souhaite le convertisseur thermodynamique de manière à lui permettre de produire à un moment précis de la journée, notamment la nuit ou au moment des pics de consommation électrique, la puissance électrique désirée, de façon indépendante de la taille et de la puissance du capteur solaire.

En outre, l'entretien de l'installation peut se faire selon des techniques classiques.

L'énergie thermique basse température résultant du refroidissement du convertisseur thermodynamique peut être utilisée localement, le cas échéant, par exemple pour le chauffage d'eau sanitaire ou d'habitations.

L'invention permet de répartir plusieurs installations sur le réseau électrique plutôt que de concentrer les capteurs en un même lieu, ce qui est le cas des centrales solaires classiques qui incluent un stockage d'énergie avec des fluides caloporteurs au sein d'un circuit complexe.

Le contenant est entrainé en rotation sur lui-même. Le contenant peut traverser le capteur solaire. Le contenant est de forme annulaire, ce qui en facilite la mise en mouvement et le défilement en boucle fermée entre les zones de chauffage et de récupération thermique.

L'installation peut comporter plusieurs contenants, solidaires entre eux, par exemple disposés côte-côte, bout à bout ou entrelacés, ou reliés entre eux par des chaînons ou articulations ou autrement.

Le matériau à changement d'état solide/liquide peut comporter de l'aluminium, notamment être constitué essentiellement d'aluminium. L'utilisation d'aluminium peut permettre un stockage non polluant et recyclable, avec des matériaux facilement disponibles.

Le convertisseur thermodynamique peut comporter au moins un moteur Stirling ou similaire ou une turbine à vapeur, entre autres possibilités.

La zone de chauffage peut être située sensiblement au foyer d'un miroir parabolique, dont le diamètre d'ouverture est compris par exemple entre 2 et 10 m. En variante, plusieurs miroirs, par exemple plans, sphériques ou paraboliques, peuvent concentrer la lumière vers la zone de chauffage.

L'installation peut comporter un générateur de chaleur annexe, pour chauffer le ou les contenants ou le convertisseur thermodynamique. En cas de manque de soleil prolongé, la production d'énergie électrique peut être assurée par ce générateur de chaleur annexe, en chauffant le ou les contenants et en restituant la chaleur au convertisseur thermodynamique ou en variante en chauffant directement le convertisseur thermodynamique. Le générateur de chaleur annexe peut utiliser toute source d'énergie fossile. La présence d'un brûleur peut ainsi permettre de prolonger la production d'énergie en brûlant un combustible, sans recourir à un groupe électrogène ou à une centrale thermique classique.

Le contenant peut être solidaire d'un système d'orientation du capteur.

L'invention peut permettre, grâce à des mesures de température, de connaître l'énergie stockée par l'installation, et un système de transmission d'informations peut être utilisé pour signaler suffisamment tôt à un gestionnaire d'un réseau électrique auquel est connectée l'installation, la nécessité ou non de démarrer une éventuelle source de secours externe ou le générateur de chaleur annexe précité. Le gestionnaire du réseau électrique peut également tenir compte des prévisions d'ensoleillement sur une échelle de 24 heures, pour la prise de décision.

Dans la zone de chauffage, la chaleur peut être transmise au contenant directement en exposant à la lumière le contenant ou en variante par l'intermédiaire de tout élément chauffé par la lumière.

Le contenant peut se déplacer, au moins sur une partie de son trajet, au sein d'une enveloppe thermiquement isolante, notamment entre les zones de chauffage et de récupération.

Dans un exemple de mise en oeuvre de l'invention, on utilise pour accumuler l'énergie thermique au moins un contenant de forme annulaire formé par plusieurs tronçons de tubes incurvés reliés entre eux par des bouchons, chaque tronçon contenant le matériau précité. Lorsque l'on utilise plusieurs contenants de forme annulaire regroupés en faisceau, ces contenants peuvent être formés chacun de plusieurs tronçons de tubes incurvés reliés entre eux par des bouchons, et les bouchons peuvent assurer la solidarisation entre eux, non seulement de deux tronçons consécutifs d'un même contenant annulaire, mais également des contenants annulaires entre eux. Différents compartiments d'un même contenant de forme annulaire, formés par lesdits tronçons, peuvent chacun contenir le matériau, sans communication entre les compartiments.

Dans un exemple de mise en oeuvre de l'invention, notamment lorsque l'on utilise plusieurs contenants de forme annulaire réunis en faisceau, ces contenants peuvent être divisés en deux groupes qui tournent en sens contraire, ce qui permet d'homogénéiser plus facilement la température des contenants.

Les contenants du faisceau peuvent être disposés autour d'une armature interne de forme annulaire, qui peut être pleine et accumuler de l'énergie thermique, étant avantageusement disposés autour de la même enveloppe thermiquement isolante que le ou les contenants. Le ou les contenants peuvent par exemple rouler sur cette armature interne, les roulements étant par exemple agencés de telle sorte qu'une rotation relative d'un groupe de contenants par rapport à cette armature interne entraîne une rotation en sens inverse de l'autre groupe de contenants.

L'armature interne peut être interrompue notamment dans la zone de chauffage, afin de ne pas gêner la transmission de la lumière au foyer vers le ou les contenants et peut être également interrompue, si nécessaire, dans la zone de récupération.

Pour réaliser le ou les contenants, on utilise de préférence un matériau résistant à au moins 200 °C, mieux 700 °C, encore mieux 800 °C. Lorsque l'on n'utilise pas de matériau à changement d'état mais uniquement un matériau à accumulation de chaleur sensible, on peut réaliser le cas échéant le contenant de façon monolithique avec une section pleine pour accumuler la chaleur sensible.

Pour réaliser l'enveloppe thermiquement isolante, on peut par exemple utiliser une structure multicouche avec un vide entre au moins deux couches.

L'invention a encore pour objet, selon un autre de ses aspects, un procédé de conversion d'énergie solaire en énergie mécanique selon la revendication 9.

Le contenant forme une boucle, étant de forme annulaire, et entraîné sur lui-même en rotation.

Le contenant peut être déplacé en continu relativement à la zone de chauffage de façon à uniformiser la température du contenant et du matériau en son sein.

Lors de la récupération de l'énergie thermique accumulée par le ou les contenants, ce ou ces derniers peuvent être déplacés par incréments. Par exemple, le ou les contenants peuvent être immobilisés temporairement relativement à la zone de récupération thermique, ce qui permet par exemple un serrage du ou des contenants contre une surface de transfert de chaleur pendant la durée nécessaire au transfert thermique. Ensuite, le ou les contenants peuvent être déplacés d'une certaine distance pour amener une nouvelle partie du ou des contenants ou d'autres contenants dans la zone de récupération thermique.

La zone de récupération thermique peut comporter une ou plusieurs mâchoires et un moyen de déplacement de ces mâchoires relativement aux contenants, les mâchoires étant actionnées pour amener le ou les contenants au contact d'une surface de transfert thermique, afin de faciliter le transfert de chaleur, lors de la restitution de l'énergie thermique accumulée par le ou les contenants. Les mâchoires peuvent être actionnées pour écarter la surface de transfert du ou des contenants lorsque le déplacement de ces derniers est nécessaire.

Le contenant ou le convertisseur thermodynamique peut être soumis à la chaleur produite par un générateur de chaleur annexe, en l'absence ou en cas de soleil insuffisant, comme mentionné plus haut.

Est encore décrit une installation solaire comportant un système de stockage d'énergie thermique comportant un élément apte à accumuler de la chaleur sensible et/ou de la chaleur latente, déplacé en boucle fermée relativement à une zone de chauffage, au moins partiellement au sein d'une enceinte thermiquement isolante. Cette installation peut comporter une zone de récupération thermique. Cette installation peut comporter plusieurs contenants tels que définis ci-dessus, par exemple de forme annulaire ou en chaîne.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, de façon schématique et partielle, un exemple d'installation réalisée conformément à l'invention,
- la figure 2 représente un autre exemple d'installation selon l'invention,

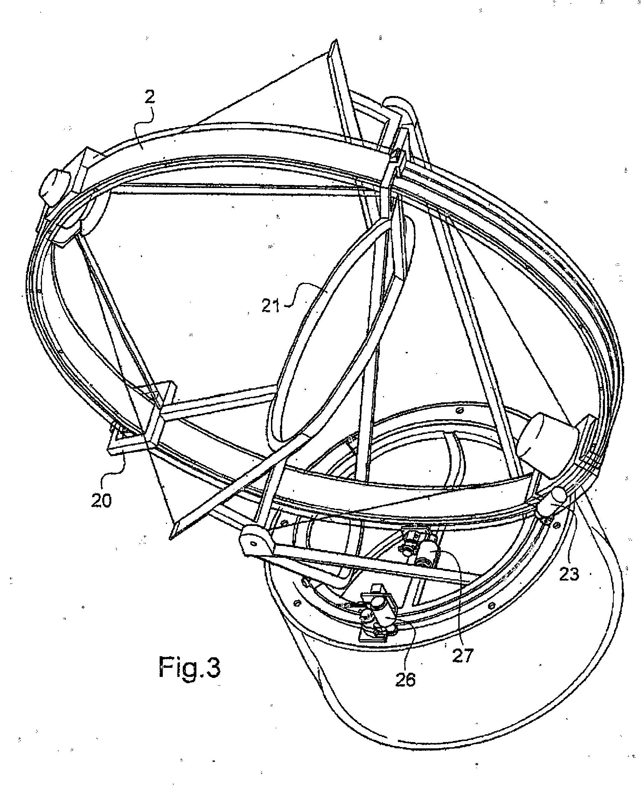

- la figure 3 représente l'installation de la figure 2, miroir enlevé,

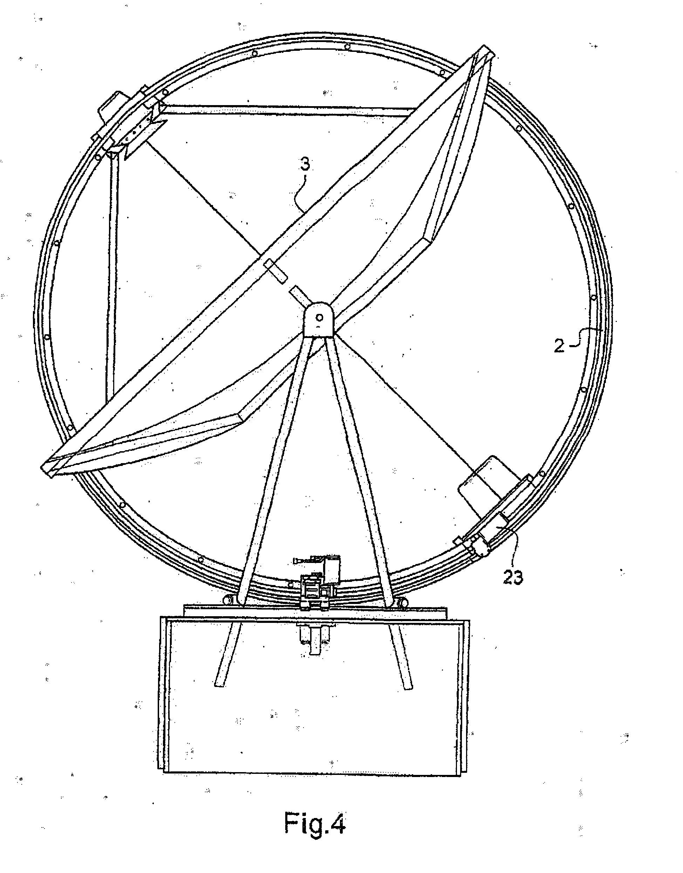

- la figure 4 est une vue de côté de l'installation de la figure 2,
- la figure 5 représente le contenant ainsi que les systèmes de collecte d'énergie lumineuse et de récupération d'énergie thermique,
- la figure 6 représente, en coupe et de façon schématique, le système de collecte d'énergie lumineuse,
- la figure 7 est une vue analogue à la figure 5, d'une variante de réalisation de l'installation,
- la figure 8 est une coupe du système de collecte d'énergie lumineuse,
- la figure 9 est une coupe du système de récupération,
- la figure 10 est coupe de l'installation de la figure 8 dans un plan perpendiculaire.

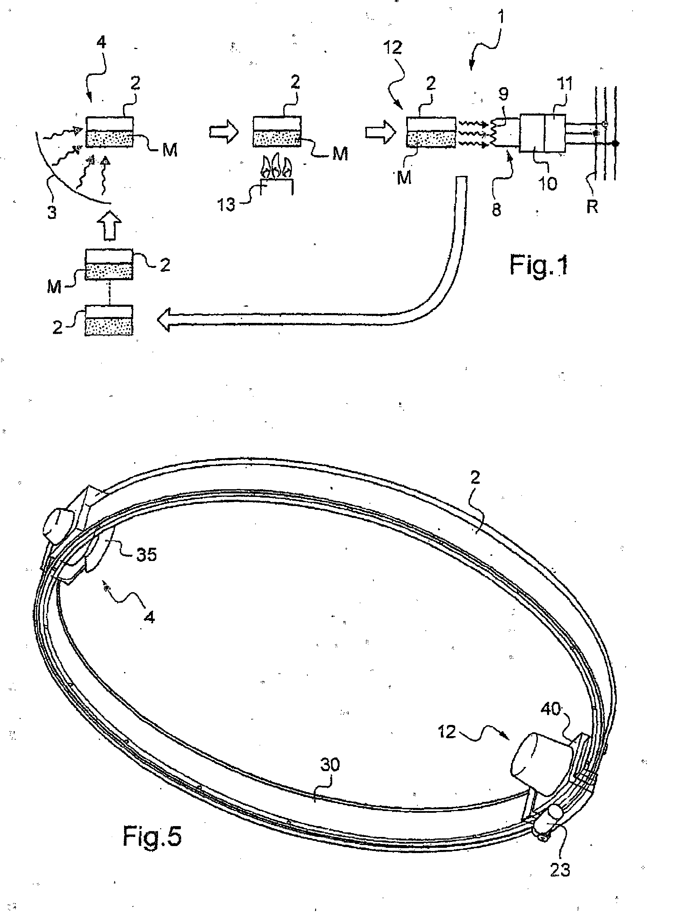

On a représenté de façon schématique à la figure 1 un premier exemple d'installation 1 réalisée conformément à l'invention, pour le stockage d'énergie solaire et la production d'énergie électrique à partir de l'énergie thermique emmagasinée.

L'installation comporte au moins un contenant 2 renfermant un matériau M à changement d'état solide/liquide, par exemple de l'aluminium, l'ensemble contenant/matériau pouvant constituer un module mobile.

L'installation 1 comporte également au moins un capteur solaire 3 permettant d'élever la température du matériau M contenu dans au moins un contenant 2 lorsque ce dernier est dans une zone de chauffage 4, qui coïncide par exemple sensiblement avec le foyer d'un miroir parabolique.

L'installation 1 comporte, dans une zone de récupération 12, un système de récupération 8 de l'énergie thermique emmagasinée par le matériau M d'au moins un contenant 2, ce système de récupération 8 étant associé à un convertisseur thermodynamique comportant par exemple un échangeur 9 et un moteur Stirling 6 accouplé à un générateur électrique 11 connecté à un réseau électrique R.

Dans un exemple de mise en oeuvre de l'invention, comme illustré à la figure 1, l'installation comporte plusieurs contenants 2 renfermant chacun une certaine quantité du matériau M, ainsi que des moyens de convoyage permettant de déplacer les contenants 2 entre la zone de chauffage 4 et la zone de récupération 12. Les contenants 2 peuvent être liés entre eux ou indépendants. Un contenant 2 unique ou plusieurs contenants disposés côte-à-côte peuvent aussi être utilisés, comme exemplifié plus loin.

Les moyens de convoyage peuvent transporter le ou les contenants 2 de la zone de chauffage 4 vers la zone de récupération 12, puis de la zone de récupération 12 vers la zone de chauffage 4, en passant le cas échéant par une ou plusieurs zones de stockage intermédiaires.

Le stockage d'énergie peut se faire par transport des contenants d'une zone de stockage à basse température où les modules peuvent être stockés en attente d'utilisation vers la ou les zones de chauffage. Une fois chauffé et le matériau fusible M contenu à l'intérieur fondu, un module peut être stocké dans une zone de stockage chaude isolée thermiquement, en l'attente du déstockage d'énergie, qui peut se faire par transport des modules de la zone de stockage chaud vers la ou les zones de récupération d'énergie thermique.

Le cas échéant, comme illustré, l'installation 1 peut comporter un générateur de chaleur annexe 13 permettant de réchauffer le matériau M ou le convertisseur thermodynamique en l'absence de soleil ou en cas d'ensoleillement insuffisant, de façon à pouvoir utiliser comme moyen de production d'électricité le système de récupération 8 et éviter ainsi la nécessité d'un générateur d'électricité supplémentaire.

Le générateur de chaleur annexe 13 peut comporter un ou plusieurs brûleurs d'énergie fossile.

Le ou les contenants 2 renfermant le matériau M peuvent se présenter sous la forme de modules de toutes formes adaptées à leur convoyage ainsi qu'à la collecte d'énergie lumineuse et à la restitution de l'énergie thermique.

Un contenant 2 comporte par exemple une enveloppe en acier. La forme des contenants peut être sphérique, cylindrique, torique, parallélépipédique ou autre. L'enveloppe d'un contenant peut être réalisée pour résister à l'aluminium liquide et à l'impact de la lumière au foyer du capteur.

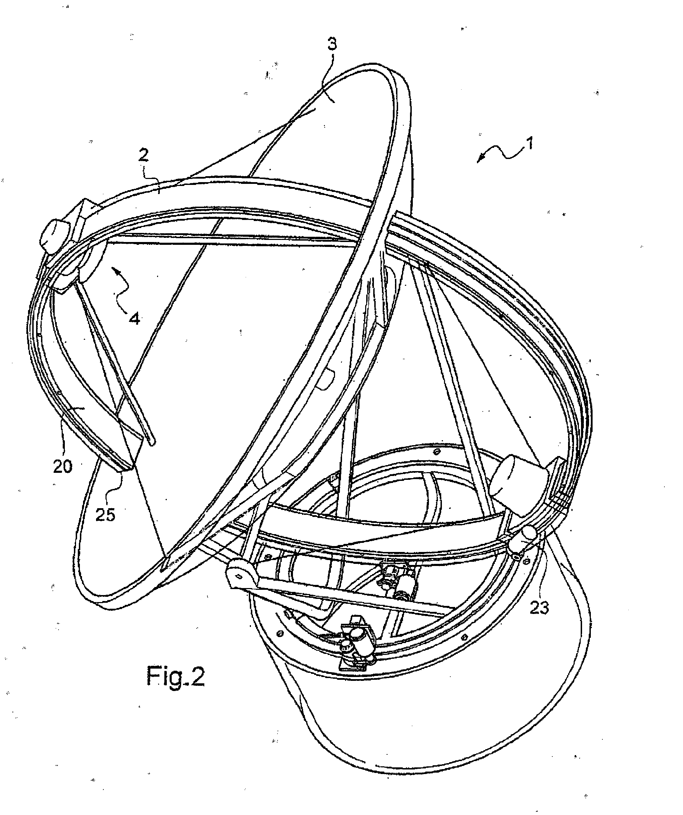

On a représenté à la figure 2 une installation 1 selon une variante de mise en oeuvre de l'invention, comportant un contenant 2 de forme annulaire autour d'un axe qui est par exemple, comme illustré, perpendiculaire à un axe de symétrie du capteur 3. Le contenant 2 peut être guidé en déplacement par une structure de guidage 20 solidaire d'une structure de support 21 d'un miroir parabolique du capteur. Une motorisation 23 peut être prévue pour entraîner en rotation le contenant 2 sur lui-même.

Le dimensionnement du contenant 2 peut être choisi de façon à permettre d'accumuler l'énergie d'une journée d'ensoleillement, par exemple pour la restituer pendant la nuit.

Le contenant 2 peut traverser le miroir du capteur 3 à la faveur d'ouvertures 25, comme on peut le voir sur la figure 2.

Le capteur 3 est avantageusement supporté par un système d'orientation visant à lui permettre de suivre le soleil, équipé de motorisations 26 et 27.

Le contenant 2 contient le matériau M à changement d'état solide/liquide et une portion donnée du contenant 2 peut être déplacée entre une zone de chauffage 4 et une zone de restitution 12, grâce à la motorisation 23. Le contenant 2 est par exemple entraîné en rotation en continu pendant le stockage, et par incréments pendant la restitution.

Le contenant 2 peut circuler à l'intérieur d'une enveloppe 30 thermiquement isolée, de forme générale annulaire, qui peut être solidaire d'un système de collecte d'énergie lumineuse 35 et d'un système 40 de restitution de l'énergie thermique emmagasinée. Cette enveloppe 30 peut être à structure multicouche, avec par exemple un vide entre deux couches adjacentes.

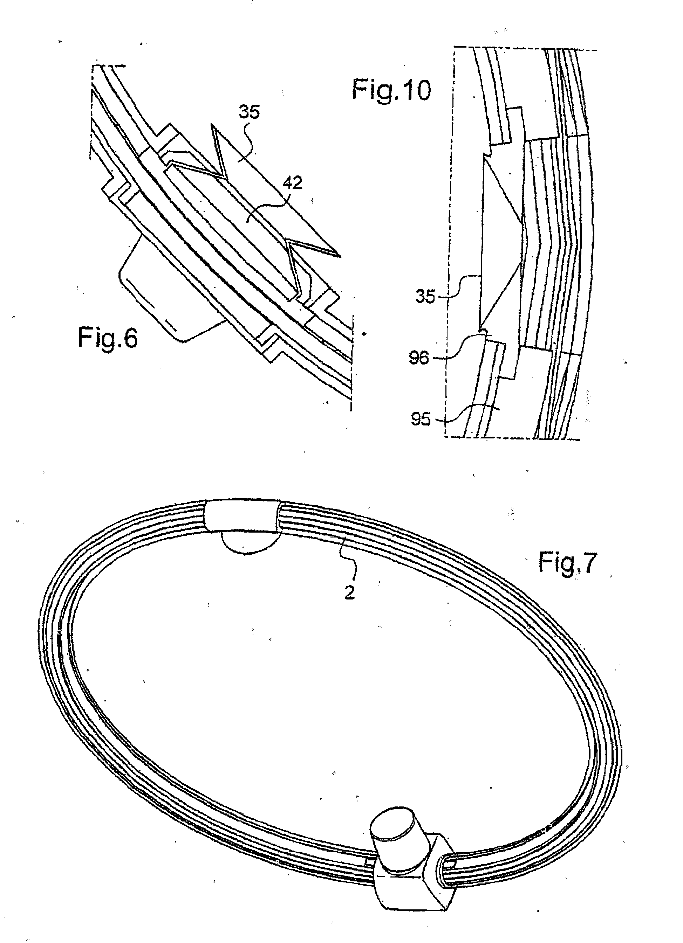

Le système de collecte 35 peut comporter, comme on le voit à la figure 6, une ouverture 42, destinée à recevoir le rayonnement lumineux concentré au foyer du miroir parabolique et transmettre par conduction et/ou rayonnement la chaleur au contenant 2 et au matériau contenu dans celui-ci, notamment au niveau de la portion du contenant 2 traversant le système de collecte 35. Le contenant 2 peut éventuellement être exposé directement à la lumière au foyer du capteur.

Le système de récupération 40 peut comporter tout échangeur de chaleur adapté à récupérer l'énergie thermique emmagasinée par le matériau M.

Le système de récupération 40 peut éventuellement comporter un brûleur pour permettre la production d'énergie en l'absence de soleil et épuisement de l'énergie thermique accumulée dans le contenant.

La variante illustrée aux figures 7 à 10 comporte plusieurs contenants 2 réunis en faisceau annulaire, avec pour le faisceau une section ouverte radialement vers l'intérieur. Chacun des contenants de forme annulaire, par exemple torique, peut être formé par plusieurs tronçons de tubes incurvés assemblés bout-à-bout pour former un tore. L'assemblage des tronçons peut se faire par des bouchons qui permettent ainsi de compartimenter le tore, chaque compartiment pouvant être rempli du matériau M, par exemple d'aluminium.

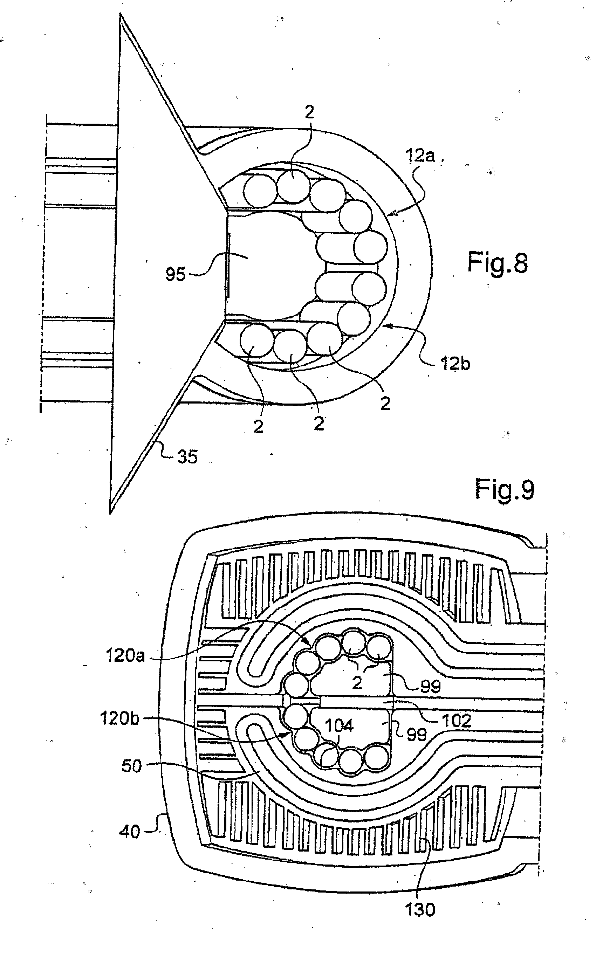

Les bouchons utilisés pour assembler les tronçons peuvent également maintenir les contenants annulaires entre eux pour former le faisceau. Il peut être avantageux de dissocier le faisceau en deux groupes de contenants, par exemple deux groupes 120a et 120b de cinq contenants, comme illustré à la figure 8, correspondant chacun à une moitié du faisceau, ces deux groupes pouvant tourner en sens inverses. Le faisceau peut être supporté par une armature interne 95 que l'on voit notamment sur la figure 10, sur laquelle les contenant peuvent rouler, l'armature 95 étant contenue dans l'enveloppe thermiquement isolante 30 et étant interrompue au niveau de la zone de chauffage et de la zone de restitution thermique. Les roulements utilisés pour guider les contenants en rotation sur l'armature interne peuvent être configurés pour que la rotation dans un sens de l'un des groupes du faisceau s'accompagne de la rotation en sens inverse de l'autre groupe du faisceau. L'armature interne 95 est reliée dans sa partie interrompue par une pièce 96 qui définit l'ouverture de la zone de chauffage. La lumière peut être focalisée au foyer du capteur à l'intérieur du faisceau, les contenants étant par exemple exposés directement à la lumière.

On voit sur la figure 9 que le système de récupération de l'énergie thermique peut comporter un conduit 50 parcouru par un fluide caloporteur s'étendant autour du faisceau de contenants 2.

On a illustré à la figure 9 la possibilité pour la zone de récupération de comporter des mâchoires 99 actionnées par un système à came 102 afin de plaquer les contenants 2 contre une surface 104 de transfert thermique, lors d'une phase de récupération de la chaleur contenue dans les contenants.

Les mâchoires 99 pressent les contenants 2 contre la surface de transfert 104 lors de la phase de restitution, et les mâchoires 99 sont actionnées de façon à libérer les contenants 2 lorsqu'il est nécessaire de déplacer ces derniers pour amener une nouvelle portion ou d'autres contenants au contact de la surface de transfert thermique 104.

Pendant l'ensoleillement, les deux groupes 120a et 120b de contenants 2 peuvent être déplacés en sens contraires en continu de façon à accumuler l'énergie thermique et pendant la phase de restitution d'énergie thermique, les groupes de contenants 120a et 120b peuvent être déplacés par incréments, selon un mouvement intermittent avec immobilisation durant la phase de restitution de la chaleur.

On peut voir sur la figure 9 que la zone de récupération peut être munie d'ailettes 130 soumises à la chaleur dégagée par combustion d'un ou plusieurs brûleurs du générateur de chaleur annexe. Le conduit 50 peut contenir par exemple le gaz d'un moteur Stirling ou de la vapeur alimentant une turbine à vapeur et peut être associé à un seul moteur Stirling ou à une seule turbine à vapeur. En variante, plusieurs zones de récupération de chaleur peuvent être associées à un même convertisseur thermodynamique. Par exemple, une turbine à vapeur peut être alimentée en vapeur par plusieurs installations comportant chacune le capteur, le système de stockage d'énergie, et une zone de récupération de la chaleur.

### Exemples

### Exemple selon l'invention

Les calculs suivants concernent un convertisseur thermodynamique comportant un moteur Stirling entraînant un générateur électrique.

### Matière fusible : aluminium

o T°fusion 658°C, densité 2,6kg/dm³
o chaleur de fusion spécifique 377kJ/kg= 0,105 kWh/kg=273Wh/dm³
o capacité thermique (chaleur sensible) 0,879kJ/(kgK).

On suppose que l'on utilise un litre de matériau fusible, et un contenant d'acier d'épaisseur 1 mm, d'un litre.

La zone de chauffage est définie par le foyer d'un capteur solaire à miroir parabolique.

On utilise pour le convertisseur thermodynamique une source froide à 60°C (convection air ambiant)

Calcul pour un litre d'aluminium :
o 0,273kWh de chaleur latente convertible en énergie mécanique par Stirling à 0,8 fois le rendement de Carnot, soit 0,8*(1-(60+273)/(658+273))/100=51%, puis 90% de rendement conversion électrique, soit 45,9%, ce qui donne 0,125kWh électrique et 0,148kWh thermique à 60°C.
o Chaleur sensible de 200°C à 658°C : 458*0,879/3600*2,6kg= 0,29 kWh convertible en énergie mécanique par Stirling à 0,8 fois rendement de Carnot, soit 0,8*(1-(60+273)/((658+200)/2+273))/100=42%, puis 90% de rendement conversion électrique, soit 37,8%, ce qui donne 0,109kWh électrique et 0,181kWh thermique à 60°C.
o Chaleur sensible de 60°C à 200°C : 140*0,879/3600*2,6kg= 0,089 kWh thermique (on suppose une récupération à 60°C)
o Chaleur sensible de 10°C à 60°C : 50*0,879/3600*2,6kg= 0,0317 kWh thermique (non récupérable)
o Bilan stockage par module de 1 litre et 2,6kg:
   - Le potentiel total thermique récupérable à 60°C est de 0,273+0,290+0,089=0,652 kWh
   - Le rendement de conversion thermique / électrique du stockage sans abaisser la température de l'aluminium au-delà de 200°C est de (0,125+0,109)/(0,273+0,29)= 0,234/0,563 = 41,5%

Si on suppose un rendement de captation solaire de 80%, dans le cas d'un besoin de production d'énergie électrique solaire de 3kW 24h/24, avec production solaire pendant 8h, le stockage sera de 3kW*16heures=48kWh électrique, avec un poids de 533kg d'aluminium (0,205 m³).

La puissance électrique sera de 3kW en continu jour et nuit. La puissance thermique du capteur solaire sera de 3kW*24h/8h/41,5%/80%= 27kW. Pour 850W/m² d'ensoleillement, la surface d'ouverture du miroir parabolique sera de 27/0,85=32m², soit un diamètre de 6,4 m.

Si le contenant, de forme torique, a un diamètre de tore égal au diamètre du miroir parabolique, la section du tore est 0,205/6,4/3,14=0,0102m², soit par exemple une section de 5 cm d'épaisseur et 20 cm de large.

Si l'on suppose le rendement de captation solaire de 80%, le rendement de la restitution électrique du stockage de 41,5%, soit un rendement solaire/électrique incluant stockage de 33,2%, c'est-à-dire près de 3 fois celui des cellules photovoltaïques mais avec en plus de l'eau chaude à 60°C utilisable et avec une très grande capacité de stockage, donc de découplage horaire de production/horaire d'utilisation. De plus, le secours d'énergie par énergie fossile est direct par brûleur sans installation supplémentaire.

### Exemple comparatif

En supposant un rendement avec cellules photovoltaïques de 12% et batteries charge/décharge de 70%, le rendement solaire/électrique incluant stockage est de 8,4%.

On peut donc grâce à l'invention avoir 2,4 fois moins de surface de captation pour la même production d'énergie électrique, sachant que l'énergie thermique est captée et utilisable. L'énergie solaire totale captée par m² est donc de plus de 6 fois celle de cellules photovoltaïques si l'on prend en compte l'énergie restante à 60°C.

L'invention n'est pas limitée aux exemples décrits. D'autres convertisseurs thermodynamiques peuvent être utilisés. La zone de récupération d'énergie peut être située ailleurs qu'à l'arrière du capteur.

L'expression "comportant un" est synonyme de "comportant au moins un"

## Revendications

1. Installation solaire (1) de production d'énergie mécanique et/ou électrique, comportant:
- un convertisseur thermodynamique,
- au moins un capteur solaire (3) pour renvoyer de la lumière solaire vers une zone de chauffage (4),
- au moins une zone de récupération thermique (12),
- au moins :
un contenant (2) de forme annulaire renfermant un matériau (M) apte à accumuler de la chaleur sensible et de préférence à changement d'état solide/liquide,
- au moins un système d'entraînement du contenant pour déplacer au moins une partie de celui-ci relativement à la zone de chauffage (4) et la zone de récupération thermique (12),
- le contenant (2) étant entraîné en rotation sur lui-même.

2. Installation selon la revendication 1, le matériau étant à changement d'état solide/liquide et comportant de l'aluminium, notamment étant constitué essentiellement d'aluminium.

3. Installation selon l'une quelconque des revendications précédentes, le convertisseur thermodynamique, étant un moteur Stirling.

4. Installation selon l'une quelconque des revendications précédentes, la zone de chauffage étant située sensiblement au foyer d'un miroir parabolique.

5. Installation selon l'une quelconque des revendications précédentes, comportant un générateur de chaleur annexe pour chauffer le contenant (2) récupérant l'énergie thermique stockée dans le contenant.

6. Installation selon l'une quelconque des revendications précédentes, le contenant (2) traversant le capteur (3).

7. Installation selon l'une quelconque des revendications précédentes, le contenant (2) étant solidaires d'un système d'orientation du capteur.

8. Installation selon l'une quelconque des revendications 1 à 7, le ou les contenants se déplaçant au moins sur une partie de son trajet au sein d'une enveloppe isolée thermiquement.

9. Procédé de conversion d'énergie solaire en énergie mécanique, mettant en oeuvre une installation solaire selon l'une quelconque des revendications précédentes, comportant les étapes consistant à :
- soumettre au moins une partie d'au moins un contenant (2) renfermant un matériau (M) apte à accumuler de la chaleur sensible et de préférence à changement d'état solide/liquide, à la chaleur produite par la concentration d'énergie lumineuse dans une zone de chauffage (4),
- déplacer ladite partie du contenant ainsi réchauffée relativement à la zone de chauffage, notamment vers une zone de récupération thermique (12),
- produire de l'énergie mécanique à partir d'énergie thermique accumulée par ledit matériau, restituée dans la zone de récupération thermique.

10. Procédé selon la revendication précédente, le contenant étant déplacé en continu pendant l'accumulation d'énergie et par intermittence pendant la restitution.

11. Procédé selon l'une quelconque des revendications 9 et 10, deux groupes (120a, 120b) de contenants étant déplacés en sens inverse, de façon à uniformiser la température du matériau (M) en leur sein.

## Patentansprüche

1. Solareinrichtung (1) zur Erzeugung mechanischer und/oder elektrischer Energie, mit
einem thermodynamischen Konverter,
wenigstens einem Sonnenkollektor (3) zum Weitergeben von Sonnenlicht auf eine Erwärmungszone (4),
wenigstens einer Zone zur thermischen Rückgewinnung (12),
wenigstens einem ringförmigen Behälter (2), der ein Material (M) enthält, das zum Ansammeln wahrnehmbarer Wärme sowie vorzugsweise für Änderungen des Zustands fest/flüssig geeignet ist
wenigstens einem Antriebssystem des Behälters, um wenigstens einen Teil desselben relativ zu der Erwärmungszone (4) und der Zone thermischer Rückgewinnung (12) zu verschieben,
wobei der Behälter (2) selbst zur Rotation angetrieben wird.

2. Einrichtung nach Anspruch 1, wobei das Material seine Zustand fest/flüssig ändert und Aluminium enthält, insbesondere im Wesentlichen aus Aluminium besteht.

3. Einrichtung nach einem der vorstehenden Ansprüche, wobei der thermodynamische Konverter ein Stirling-Motor ist.

4. Einrichtung nach einem der vorstehenden Ansprüche, wobei die Erwärmungszone im Wesentlichen im Brennpunkt eines Parabolspiegels angeordnet ist.

5. Einrichtung nach einem der vorstehenden Ansprüche, mit einem Wärmegeneratoranbau zum Erwärmen des Behälters (2), der die in dem Behälter gespeicherte thermische Energie rückgewinnt.

6. Einrichtung nach einem der vorstehenden Ansprüche, wobei der Behälter (2) den Kollektor (3) durchdringt.

7. Einrichtung nach einem der vorstehenden Ansprüche, wobei der Behälter (2) fest mit einem Orientierungssystem des Kollektors verbunden ist.

8. Einrichtung nach einem der Ansprüche 1 bis 7, wobei der oder die Behälter wenigstens über einen Teil seiner Erstreckung im Inneren einer thermisch isolierenden Umhüllung angeordnet ist.

9. Verfahren zur Konversion von Sonnenenergie in mechanische Energie, das eine Solareinrichtung gemäß einem der vorstehenden Ansprüche einsetzt, wobei in dem Verfahren Schritte ausgeführt werden, in denen
wenigstens ein Teil wenigstens eines Behälters (2), der ein Material (M) enthält, das zum Sammeln von wahrnehmbarer Wärme und vorzugsweise zur Änderung des Zustands fest/flüssig geeignet ist, einer Wärme ausgesetzt wird, die durch die Konzentration von Sonnenenergie in einer Erwärmungszone (4) erzeugt wurde,
der so erwärmte Teil des Behälters relativ zu der Erwärmungszone verschoben wird, insbesondere in Richtung einer Zone zur thermischen Rückgewinnung (12),
aus der thermischen Energie, die durch das Material gesammelt und in der Zone thermischer Rückgewinnung wiedergewonnen wurde, mechanische Energie erzeugt wird.

10. Verfahren nach dem vorstehenden Anspruch, wobei der Behälter während des Energiesammelns kontinuierlich und während der Rückgewinnung intermittierend verschoben wird.

11. Verfahren nach einem der Ansprüche 9 und 10, wobei zwei Gruppen (120a, 120b) von Behältern in umgekehrter Richtung verschoben werden, so dass die Temperatur des Materials (M) in ihrem Inneren vereinheitlicht wird.

## Claims

1. Solar installation (1) for producing mechanical and/or electrical energy, comprising:
- a thermodynamic converter,
- at least one solar collector (3) for reflecting sunlight towards a heating area (4),
- at least one heat recovery area (12),
- at least:
one annular container (2) containing a material (M) capable of accumulating sensible heat and preferably having a solid/liquid state change,
- at least one system for driving the container so as to move at least a portion thereof relatively to the heating area (4) and to the heat recovery area (12),
- the container (2) being driven in rotation about itself.

2. Installation according to Claim 1, the material having a solid/liquid state change and including aluminium, in particular being composed substantially of aluminium.

3. Installation according to either of the preceding claims, the thermodynamic converter being a Stirling engine.

4. Installation according to any one of the preceding claims, the heating area being located substantially at the focal point of a parabolic mirror.

5. Installation according to any one of the preceding claims, including a supplementary heat generator for heating the container (2) recovering heat energy stored in the container.

6. Installation according to any one of the preceding claims, the container (2) passing through the collector (3).

7. Installation according to any one of the preceding claims, the container (2) being united to a guidance system of the collector.

8. Installation according to any one of Claims 1 to 7, the container or containers moving for at least a part of their travel within a thermally insulated envelope.

9. Method for converting solar energy into mechanical energy utilising a solar installation according to any one of the preceding claims and comprising steps consisting of:
- subjecting at least a portion of at least one container (2), which contains a material (M) capable of accumulating sensible heat and preferably having a solid/liquid state change, to the heat produced by the concentration of light energy in a heating area (4),
- moving said portion of the container thus heated relatively to the heating area, in particular towards a heat recovery area (12),
- producing mechanical energy from the heat energy accumulated by said material and restituted in the heat recovery area.

10. Method according to the preceding claim, the container being moved continuously during energy accumulation and intermittently during restitution.

11. Method according to either of Claims 9 and 10, two groups (120a, 120b) of containers being moved in opposite directions so as to render uniform the temperature of the material (M) within them.
